# EUROPÄISCHE PATENTSCHRIFT

(11) **EP 1 154 831 B1**
(45) Veröffentlichungstag und Bekanntmachung des Hinweises auf die Patenterteilung: **21.02.2007**
(21) Anmeldenummer: 00989829.7
(22) Anmeldetag: 01.12.2000
(51) Int. Cl.: B01D 35/153, B01D 29/21

(54) **FLÜSSIGKEITSFILTER MIT DEMONTIERBAREM, ZENTRALEN BAUTEIL, MIT ZUSÄTZLICHEM HALTEBAUTEIL**
FLUID FILTER WITH REMOVABLE CENTRAL COMPONENT WITH ADDITIONAL RETAINER
FILTRE A LIQUIDE COMPRENANT UN ELEMENT CENTRAL DEMONTABLE ET UN ELEMENT DE MAINTIEN SUPPLEMENTAIRE

(30) Priorität: 02.12.1999 DE 29921168 U
(43) Veröffentlichungstag der Anmeldung: 21.11.2001
(73) Patentinhaber: Hengst GmbH & Co. KG, 48147 Münster (DE)
(72) Erfinder: ARDES, Wilhelm, 59387 Ascheberg (DE)
(74) Vertreter: Habbel, Ludwig
(86) Internationale Anmeldenummer: PCT/DE2000/004299
(87) Internationale Veröffentlichungsnummer: WO 2001/039864

(56) Entgegenhaltungen:
- EP-A- 0 612 549
- DE-A- 3 903 675
- DE-U- 29 610 290
- US-A- 5 601 710

## Beschreibung

Die Erfindung betrifft einen Filter nach dem Oberbegriff des Anspruches 1.

Ein derartiger Filter ist vom Anmelder bekannt.

Dabei ist vorgesehen, das zentrale Bauteil mit seitlichen Flügeln zu versehen, die an Vorsprünge im Inneren des Filtergehäuses anstoßen und das zentrale Bauteil auf diese Weise drehfest festlegen. Unter Verbiegung oder bewußter Zerstörung dieser Flügel kann das zentrale Bauteil in eine Drehstellung um seine Drehachse verschwenkt werden, in der es demontierbar ist.

Der vorliegenden Erfindung liegt die Aufgabe zugrunde, einen gattungsgemäßen Flüssigkeitsfilter dahingehend weiterzubilden, daß dieser die problemlose Montage bzw. Demontage des zentralen Bauteiles auch bei den unterschiedlichsten Filtergeometrien und dementsprechend unterschiedlichsten Einbauverhältnissen innerhalb des Filtergehäuses ermöglicht.

Diese der Erfindung zugrundeliegende Aufgabe wird durch einen Flüssigkeitsfilter mit den Merkmalen des Anspruches 1 oder des Anspruches 3 gelöst.

Die Erfindung schlägt mit anderen Worten zwei unterschiedliche Ansätze vor: Einerseits ist es möglich, das zentrale Bauteil werdrehfest anzuordnen. Zu diesem Zweck wird das zentrale Bauteil von einem Haltebauteil umgeben, welches seinerseits nicht drehbeweglich im Filtergehäuse angeordnet ist. Insbesondere bei unregelmäßig konturierten Filtergehäusen kann daher das Haltebauteil derart ausgestaltet sein, daß es ausschließlich axial in dem Filtergehäuse montiert werden kann und keine Drehbeweglichkeit -auch keine Drehbeweglichkeit um wenige Winkelgrade - aufweist. Das zentrale Bauteil hingegen kann grundsätzlich frei drehbeweglich innerhalb des Filtergehäuses angeordnet sein. Durch die entsprechende Konturierung zwischen dem Haltebauteil und dem zentralen Bauteil wird das zenrale Bauteil jedoch drehfest bzw. drehbeschränkt innerhalb des Filtergehäuses festgelegt. Die axiale Sicherung des zentralen Bauteiles erfolgt dabei in an sich bekannter Weise, beispielsweise durch federelastische, nach außen weisende Rasthaken, die entsprechende Vorsprünge in Filtergehäuse hintergreifen. Da die Vorsprünge, wie auch die Rasthaken sich jeweils nicht über den gesamten Umfang des Filtergehäuses bzw. zentralen Bauteiles ersfrecken, kann das zentrale Bauteil aus seiner Betriebsstellung durch eine Teildrehung um seine Längsachse in die Demontagestellung verdreht werden, in der seine Rasthaken jeweils zwischen zwei benachbarten Vorsprüngen des Filtergehäuses axial verschoben werden können, so daß in dieser Demontagestellung das zentrale Bauteil aus dem Filtergehäuse gezogen werden kann. Die Haltebaugruppe selbst braucht ihrerseits nicht weiter im Filtergehäuse festgelegt zu werden: Sie ist lediglich axial beweglich und durch die Verbindung mit dem zentralen Bauteil und dessen axialer Festlegung, beispielsweise mittels der erwähnten federelastischen Krallen, sind beide Bauteile auf diese Weise in axialer Richtung fixiert. Die Drehfixierung ihrerseits wird durch die entsprechende Konturierung zwischen dem zentralen Bauteil und dem Haltebauteil und der drehbeschränkten Lagerung des Haltebauteiles innerhalb des Filtergehäuses erzielt.

Die aufzubringenden Kräfte, um das zentrale Bauteil gegenüber dem Haltebauteil aus seiner Betriebsstellung in die Demontagestellung verdrehen zu können, sind so hoch eingestellt, daß demgegenüber geringere Drehkräfte, wie sie beispielsweise beim Aufschrauben oder beim Losschrauben eines Deckels vom Filtergehäuse auftreten und zumindest teilweise auf das zentrale Bauteil übertragen werden, nicht zu einer Verdrehung des zenralen Bauteiles gegenüber dem Haltebauteil führen können. Gegebenenfalls können sogar spezielle Schlüsselflächen od. dgl. am zentralen Bauteil vorgesehen sein, so daß die Drehbewegung des zentralen Bauteiles gegenüber dem Haltebauteil ggf. nur mit Hilfe eines Werkzeuges ermöglicht sein kann.

Alternativ schlägt die Erfindung vor, das zentrale Bauteil nicht einen Vorsprung hintergreifen zu lassen, der unmittelbar am Filtergehäuse vorgesehen ist. Auf diese Weise kann das Filtergehäuse preisgünstig ohne die Notwendigkeit einer Hinterschneidung hergestellt werden. Der Vorsprung, den das zentrale Bauteil hintergreift, kann vielmehr durch das zusätzlich vorgesehene Haltebauteil erzielt werden, wobei dieses lösbar mit dem Filtergehäuse verbunden ist, insbesondere vorteilhaft mit dem Filter-gehäuse verschraubt sein kann.

Bei den Haltebauteilen beider Vorschläge der Erfindung kann es sich jeweils um ein Kombinationsbauteil handeln, welches außer der reinen Haltefunktion noch weitere Funktionen aufweist und entsprechende Funktionsbauteile oder Funktionsbaugruppen trägt. Beispielsweise können zur Erzielung von Ventilfunktionen an der Kombinationsbaugruppe bereits vormontierte Ventilbaugruppen angeordnet sein, die beispielsweise unverlierbar gehaltene Ventilkörper aufweisen, während die diesen Ventilen zugeordneten Dichtflächen bzw. Ventilsitze im Filtergehäuse vorgesehen sein können, so daß mit Einsätzen des Kombinationsbauteiles in das Filtergehäuse das Ventil montiert wird.

Zwei Ausführungsbeispiele der Erfindung werden anhand der Zeichnungen im folgenden näher erläutert. Dabei zeigt
- Fig. 1: einen Vertikalschnitt durch ein erstes Ausführungsbeispiel und
- Fig. 2: einen Querschnitt durch den Filter von Fig. 1,
- Fig. 3: einen Vertikalschnitt durch ein zweites Ausführungsbeispiel entsprechend den Linien A - A von Fig. 4,
- Fig. 4: einen Querschnitt durch das Ausführungsbeispiel von Fig. 3 entsprechend der Linie B - B von Fig. 3 und
- Fig. 5: einen Querschnitt durch das Ausführungsbeispiel von Fig. 3 entlang der Linie C - C von Fig. 3.

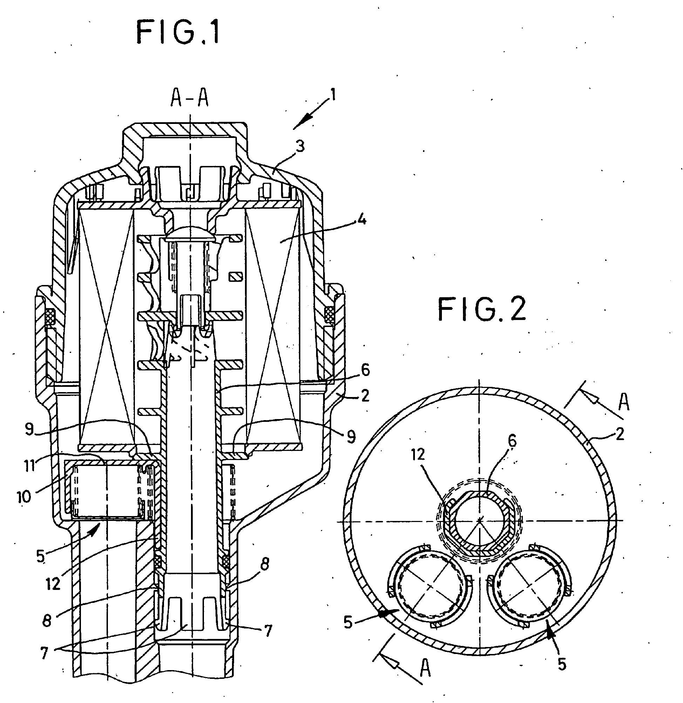

In Fig. 1 ist mit 1 ein Filter bezeichnet mit einem Filtergehäuse 2 und einem mit dem Filtergehäuse 2 verschraubten Deckel 3, wobei innerhalb des Filters 1 ein auswechselbarer Filtereinsatz 4 mit dem eigentlichen Filtermedium, beispielsweise in Form einer Faltenfilterfläche, vorgesehen ist.

Das Filtergehäuse 2 ist beispielsweise aufgrund baulicher Einschränkungen am Motorgehäuse nicht über seine ganze Höhe rotationssymmetrisch aufgebaut. Für bestimmte Einbauten, wie beispielsweise eine Ventilbaugruppe 5, ist daher eine frei Drehbarkeit um die Längsachse des Filters 1 innerhalb des Filtergehäuses 2 nicht möglich. Innerhalb des Filtereinsatzes 4 ist ein zentrales Bauteil 6 vorgesehen. Dieses Bauteil ist im wesentlichen rohrförmig ausgestaltet, weist jedoch Ausnehmungen auf, so daß gefiltertes Öl innerhalb des Filtereinsatzes 4 nach unten ablaufen und zu den Schmierstellen des Verbrennungsmotors gefördert werden kann. Das zentrale Bauteil 6 ist als Stützdom bezeichnet, da es unter den im Betrieb auftretenden Druck- und Temperaturbedingungen ein Kollabieren des Filtermaterials verhindert. Auf diese Weise wird der Filtereinsatz 4 preisgünstig ohne eine fest angeformte innere Stützvorrichtung für das Filtermedium ausgestaltet werden.

Das zentrale Bauteil 6 weist an seinem unteren Ende mehrere Haltekrallen 7 auf, die jeweils einen Vorsprung 8 im Filtergehäuse 2 hintergreifen. Die Vorsprünge 8 sind nicht als ein umlaufender, ringförmiger Vorsprung ausgestaltet, sondern als einzelne Vorsprünge, zwischen denen jeweils Freiräume vorgesehen sind. Wenn das zentrale Bauteil 6 gegenüber seiner dargestellten Betriebsstellurig um seine Längsachse verdreht wird, können die Haltekrallen 7 durch derartige Freiräume zwischen den Vorsprüngen 8 geführt werden, so daß in dieser verdrehten Stellung oder auch Demontagestellung, das zentrale Bauteil 6 aus dem Filtergehäuse 2 entnommen werden kann. Da das zentrale Bauteil 6 einen umlaufenden unteren Kragen 9 aufweist, wird mittels des zentralen Bauteiles 6 auch die Ventilbaugruppe 5 in ihrer dargestellten Stellung gehalten. Die Ventilbaugruppe 5 ist dabei Teil eines Kombinationsbauteiles 10, welches an einer Grundplatte 11 mehrere Funktionselemente trägt, z. B. wie aus Fig. 2 ersichtlich, eine weitere Ventilbaugruppe 5, die baulich ähnlich oder gleich wie die aus Fig. 1 ersichtliche Ventilbaugruppe ausgestaltet ist. Weiterhin trägt das Kombinationsbauteil 10 an seiner Grundplatte 11 einen Stutzen 12 mit einem etwa C-förmigen Querschnitt. Dieser Stutzen 12 umgibt das zentrale Bauteil 6, wobei sowohl die Außenkontur des zentralen Bauteiles 6 als auch die lnnenkontur des Stutzens 12 polygonal ausgestaltet sind, so daß eine verdrehfeste Verklemmung bzw. Verrastung erzielt wird, in welcher das zentrale Bauteil 6 innerhalb des Stutzens 12 und damit innerhalb des Kombinationsbauteiles 10 gehalten ist, so daß dieses Kombinationsbauteil 10 auch als Haltebauteil bezeichnet ist.

Durch Überwindung der Klemmkraft zwischen Stutzen 12 und zentralem Bauteil 6 kann das zentrale Bauteil verdreht werden und seine Demontagestellung einnehmen, in der es mit den Haltekrallen 7 durch die Freiräume zwischen den Vorsprüngen 8 aus dem Filtergehäuse 2 entnommen werden kann. Nachdem das zentrale Bauteil 6 mit seinem unteren Kragen 9 aus dem Filtergehäuse 2 entnommen ist, kann auch das Haltebauteil 10 entnommen werden, so daß beispielsweise die Ventilbaugruppen 5 ausgetauscht werden können.

Die polygonale Ausgestaltung von Stutzen 12 und zentralem Bauteil 6 stellt auf vorteilhafte Weise sicher, daß nach Verdrehen des zentralen Bauteiles 6 in seine Demontagestellung dieses zentrale Bauteil 6 diese Drehstellung automatisch beibehält, so daß eine besonders einfache Handhabung ermöglicht wird und der Anwender nicht das zentrale Bauteil 6 hinsichtlich seiner Drehorientierung nicht in der Demontagestellung hatten muß, da diese vielmehr selbsttätig eingenommen verbleibt.

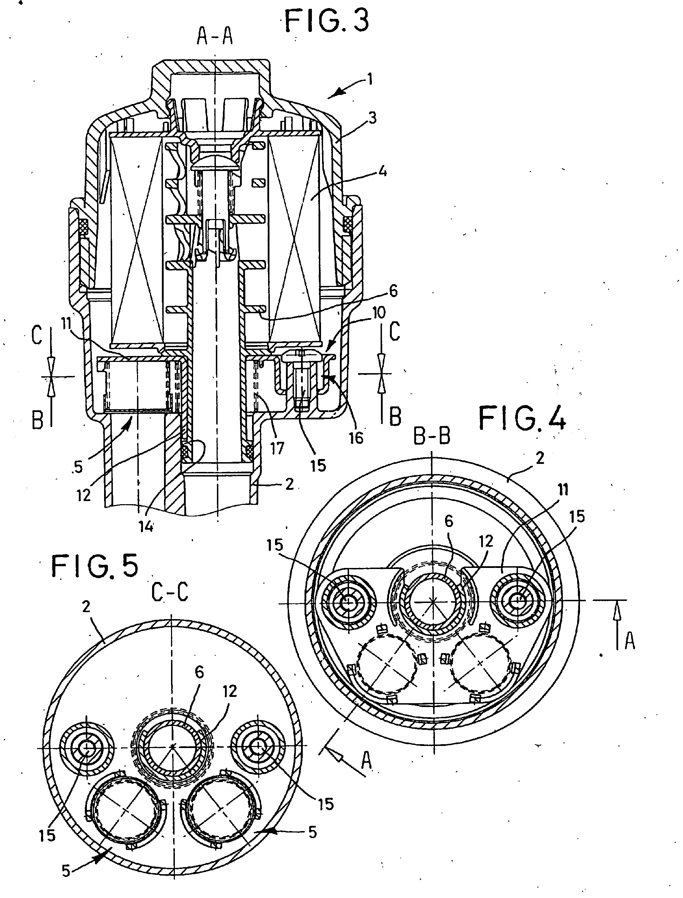

In Fig. 3 ist ein zweites Ausführungsbeispiel der Neuerung dargestellt, wobei das zentrale Bauteil 6 keine Haltekrallen aufweist, so daß dementsprechend am Filtergehäuse 2 keine Hinterschneidungen vorgesehen sind und dementsprechend die Fertigung des Filtergehäuses 2 preisgünstiger und problemloser möglich ist als bei dem Ausführungsbeispiel von Fig. 1. Der Vorsprung, den das zentrale Bauteil 6 hintergreift, wird vielmehr durch das Haltebauteil 10 gebildet: Auch dieses Haltebauteil 10 weist einen Stutzen 12 auf, wobei aus den Fig. 4 und 5 ersichtlich ist, daß dieser nicht polygonal konturiert ist. Er erstreckt sich nach unten bis über einen Kragen 14 am zentralen Bauteil 6, so daß auch in diesem Fall das zentrale Bauteil 6 einen Vorsprung hintergreift, der am Filtergehäuse 2 festgelegt ist, wobei dieser Vorsprung jedoch durch den Stutzen 12 des Haltebauteiles 10 gebildet ist, wobei dieses Haltebauteil 10 eine Grundplatte 11 aufweist, die Ventilbaugruppen 5 trägt sowie Schrauben 15, mit denen das Haltebauteil 10 am Filtergehäuse 2 festgeschraubt ist. Aufgrund dieser Verschraubung ist der durch den Stutzen 12 gebildete Vorsprung, den das zentrale Bauteil 6 hintergreift, ebenfalls ein filterfester oder gehäuseseitiger Vorsprung.

Die Grundplatte 11 des Haltebauteiles 10 weist zwei Vertiefungen 16 auf, die die Schraubenköpfe der Schrauben 15 aufnehmen können. Auf diese Weise ist eine Höhenbeweglichkeit des Haltebauteiles 10 gegenüber dem Filtergehäuse 2 gegeben, wobei der Schraubenkopf einen Anschlag für die Vertiefung 16 darstellt, so daß das Haltebauteil 10 unverlierbar am Filtergehäuse 2 festgelegt ist.

Wenn die in Fig. 3 dargestellte Ventilbaugruppe 5 beispielsweise als Ablaßventil dienen soll, so kann nach Abschrauben des Deckels 3 eine Feder 17 die Grundplatte 11 und damit das gesamte Haltebauteil 10 anheben, so daß der plättchenförmige Ventilkörper der Ventilbaugruppe 5 von seinem Ventilsitz abgehoben wird und im Inneren des Filtergehäuses 2 befindliches Restöl abgelassen werden kann, so daß anschließend bei Entnahme des Filtereinsatzes 4, dieser möglichst tropfarm und verschmutzungsarm entnehmbar ist.

## Patentansprüche

1. Flüssigkeitsfilter, insbesondere Ölfilter für einen Verbrennungsmotor, mit einem Filtergehäuse, und mit einem zentralen, etwa rohrförmigen Bauteil, welches sich in den Innenraum des Filters erstreckt, wobei dieses zentrale Bauteil in einer Betriebsstellung einen am Filtergehäuse befindlichen Vorsprung hintergreift und unverlierbar im Filtergehäuse gehalten ist, und wobei dieses Bauteil außer Eingriff mit diesem Vorsprung bringbar ist und in dieser Demontagestellung zerstörungsfrei aus dem Filter entnehmbar ist, **dadurch gekennzeichnet, daß** das Bauteil (6) um seine Längsachse drehbar im Filtergehäuse (2) gelagert ist, wobei innerhalb des Filtergehäuses (2) ein Haltebauteil (10) drehbeschränkt angeordnet ist, welches das zentrale Bauteil (6) mittels eines Klemm- oder Rastsitzes drehfest in seiner Betriebsstellung festlegend umgreift, wobei unter Überwindung der Klemm- oder Rastkraft das zentrale Bauteil (6) in seine Demontagestellung verdrehbar ist.

2. Filter nach Anspruch 1, **dadurch gekennzeichnet, daß** das zentrale Bauteil (6) und das Haltebauteil (10) miteinander zusammenwirkende Polygonkonturen aufweisen.

3. Flüssigkeitsfilter, insbesondere Ölfilter für einen Verbrennungsmotor, mit einem Filtergehäuse, und mit einem zentralen, etwa rohrförmigen Bauteil, welches sich in den Innenraum des Filters erstreckt, wobei dieses zentrale Bauteil in einer Betriebsstellung einen am Filtergehäuse befindlichen Vorsprung hintergreift und unverlierbar im Filtergehäuse gehalten ist, und wobei dieses Bauteil außer-Eingriff mit diesem Vorsprung bringbar ist und in dieser Demontagestellung zerstörungsfrei aus dem Filter entnehmbar ist, **dadurch gekennzeichnet, daß** das zentrale Bauteil (6) von einem mit dem Filtergehäuse (2) verschraubbaren Haltebauteil (10) formschlüssig gehalten ist, wobei das Haltebauteil (10) den Vorsprung ausbildet.

4. Flüssigkeitsfilter nach einem der Ansprüche 1 bis 3, **dadurch gekennzeichnet, daß** das Haltebauteil (10) als Kombinationsbauteil ausgestaltet ist, welches einen Tragkörper, wie eine Grundplatte (11), aufweist, wobei an dem Tragkörper mehrere Funktionselemente angeordnet sind, wie Ventilbaugruppen (5) mit Ventilkörpern, oder eine das zentrale Bauteil (6) festlegende Klammer bzw. ein das zentrale Bauteil (6) festlegender Vorsprung oder Schraublöcher.

5. Flüssigkeitsfilter nach Anspruch 4, **dadurch gekennzeichnet, daß** die Schraublöcher jeweils in einer den Schraubenkopf aufnehmenden Vertiefung (16) angeordnet sind.

## Claims

1. Fluid filter, particularly an oil filter for an internal combustion engine, having a filter housing and having a central, for example tubular component which extends into the inner chamber of the filter, where this central component, when in an operating position, engages behind a projecting portion located in the filter housing and is retained captively in the filter housing and where this component can be disengaged from this projecting portion and in this disengaged position can be removed from the filter without being irreparably damaged, **characterised in that** the component (6) is rotatably supported about its longitudinal axis in the filter housing (2), where a retaining member (10) is arranged limitedly rotatably inside the filter housing (2) which retaining member (1) by means of a clamping or retaining fit grips and holds the central component (6) nonrotatably in its operating position, where by overcoming the clamping or retaining fit the central component (6) can be rotated into its demounting position.

2. Filter according to claim 1, **characterised in that** the central component (6) and the retaining member (10) incorporate polygonal contours which interact with one another.

3. Fluid filter, particularly an oil filter for an internal combustion engine, having a filter housing and having a central, for example tubular component which extends into the inner chamber of the filter, where this central component, when in an operating position, engages behind a projecting portion located in the filter housing and is retained captively in the filter housing and where this component can be disengaged from this projecting portion and in this disengaged position can be removed from the filter without being irreparably damaged, **characterised in that** the central component (6) is positively retained by a retaining member (10) which can be bolted to the filter housing (2), where the retaining member (10) forms the projecting portion.

4. Fluid filter according to any of claims 1 to 3, **characterised in that** the retaining member (10) is constructed as a combination member which incorporates a bearing member, such as a base plate (11), where a number of functional elements, such as valve assemblies or a clamp firmly holding the central component (6) or a projecting portion firmly holding the central component (6) or screw holes, are arranged on the bearing member.

5. Fluid filter according to claim 4, **characterised in that** each of the screw holes is arranged in a recess (16) to receive the screw head.

## Revendications

1. Filtre à liquide, en particulier filtre à huile pour un moteur à combustion interne, avec un corps de filtre et un élément central approximativement tubulaire qui s'étend dans le compartiment intérieur du filtre, lequel élément central se met en prise, dans une position de service, derrière une saillie prévue sur le corps du filtre et est retenu de façon imperdable dans le corps de filtre, et lequel élément peut être dégagé de la prise avec cette saillie et retiré du filtre sans destruction dans cette position de démontage, **caractérisé en ce que** l'élément (6) est supporté dans le corps de filtre (2) avec possibilité de rotation autour de son axe longitudinal, un élément de maintien (10) étant disposé à l'intérieur du corps de filtre (2) avec possibilité de rotation restreinte, qui entoure et retient l'élément central (6) dans sa position de service de manière fixe en rotation par un engagement par serrage ou emboîtement, l'élément central (6) pouvant être tourné dans sa position de démontage en surmontant la force de serrage ou d'emboîtement.

2. Filtre selon la revendication 1, **caractérisé en ce que** l'élément central (6) et l'élément de maintien (10) présentent des contours polygonaux coopérant l'un avec l'autre.

3. Filtre à liquide, en particulier filtre à huile pour un moteur à combustion interne, avec un corps de filtre et un élément central approximativement tubulaire qui s'étend dans le compartiment intérieur du filtre, lequel élément central se met en prise, dans une position de service, derrière une saillie prévue sur le corps du filtre et est retenu de façon imperdable dans le corps de filtre, et lequel élément peut être dégagé de la prise avec cette saillie et retiré du filtre sans destruction dans cette position de démontage, **caractérisé en ce que** l'élément central (6) est retenu en correspondance de forme par un élément de maintien (10) pouvant être vissé sur le corps de filtre (2), lequel élément de maintien (10) forme la saillie.

4. Filtre à liquide selon l'une des revendications 1 à 3, **caractérisé en ce que** l'élément de maintien (10) est conçu comme un élément composé qui possède un corps de support tel qu'une plaque de base (11), lequel corps de support porte plusieurs éléments fonctionnels tels que des groupes de soupapes (5) avec des corps de soupapes ou une pince fixant l'élément central (6) ou une saillie fixant l'élément central (6) ou des trous filetés.

5. Filtre à liquide selon la revendication 4, **caractérisé en ce que** les trous filetés sont disposés chacun dans un renfoncement (16) recevant la tête de vis.
